# FASCICULE DE BREVET EUROPEEN

(11) **EP 1 218 316 B1**
(45) Date de publication et mention de la délivrance du brevet: **28.12.2005**
(21) Numéro de dépôt: 00966242.0
(22) Date de dépôt: 29.09.2000
(51) Int. Cl.: C05D 3/02, C05B 1/00

(54) **PRODUIT FERTILISANT ET PROCEDE POUR SON OBTENTION**
DÜNGEMITTEL UND VERFAHREN ZU DESSEN HERSTELLUNG
FERTILISER PRODUCT AND METHOD FOR OBTAINING SAME

(30) Priorité: 29.09.1999 FR 9912145
(43) Date de publication de la demande: 03.07.2002
(73) Titulaire: Fibac, 38100 Grenoble (FR)
(72) Inventeur: DAVILLER, Daniel, F-38320 Poisat (FR)
(74) Mandataire: Hammond, William
(86) Numéro de dépôt international: PCT/FR2000/002711
(87) Numéro de publication internationale: WO 2001/023325

(56) Documents cités:
- WO-A-92/12945
- DE-A- 2 706 077
- DE-A- 3 513 483
- DE-A- 4 018 637
- US-A- 3 791 810
- US-A- 4 410 350
- DATABASE WPI Section Ch, Week 198920 Derwent Publications Ltd., London, GB; Class L02, AN 1989-147484 XP002152478 & JP 01 090313 A (KAWAI SEKKAI KK), 6 avril 1989 (1989-04-06)

## Description

La présente invention concerne un nouveau produit fertilisant associant des amendements calciques et magnésiens sous forme oxyde à des engrais choisis pour leur solubilité, ainsi qu'un procédé pour son obtention.

Il sera rappelé qu'un amendement est un produit qui, incorporé au sol, a pour effet principal d'en améliorer les propriétés physiques et peut en modifier les propriétés chimiques et biologiques. On distingue usuellement divers types d'amendements : les amendements calciques et magnésiens qui sont destinés à maintenir ou élever le pH et améliorent la structure des sols ; les amendements organiques qui sont destinés à maintenir ou élever le taux de matière organique du sol ; les amendements physiques qui sont destinés à améliorer les caractéristiques granulométriques du sol.

Par contre, un engrais est un produit organique ou minéral qui fournit aux plantes des éléments fertilisants directement utiles à leur nutrition.

Actuellement, l'agriculture vit une nouvelle mutation dans la mesure où l'agriculteur veut économiser le nombre de passage en essayant d'apporter en un seul passage le maximum de produits. Or, jusqu'à maintenant, l'apport d'amendement est encore trop souvent dissocié de l'apport d'engrais.

Aussi un des buts de la présente invention est-il de fournir un produit qui permet d'associer des amendements calciques et magnésiens sous forme oxyde à des engrais choisis pour leur solubilité de telle sorte qu'un amendement et un engrais soient simultanément apportés à un sol.

Un autre but de l'invention est de fournir un tel produit qui ne provoque pas la formation d'un nuage de poussières lors de sa mise en oeuvre.

La présente invention concerne aussi un procédé pour fabriquer un tel produit qui permet d'éviter la formation de poussières lors de l'utilisation du produit ainsi que lors de sa fabrication.

La formation de poussières, que ce soit lors de la fabrication d'un produit comme un amendement ou un engrais ou lors de l'utilisation d'un tel produit, est un inconvénient majeur dans la mesure où cela a notamment pour conséquence la perte de constituants de ce produit et/ou un apport à des zones non cultivées.

Ces buts, ainsi que d'autres qui apparaîtront par la suite, sont atteints par un produit qui est caractérisé, selon la présente invention, par le fait qu'il comprend un amendement calcique et magnésien associé à un engrais simple, binaire ou ternaire et qu'il présente une granulométrie comprise entre 2 et 7 mm.

L'amendement calcique et magnésien comprend une chaux dont le taux de gaz carbonique (CO₂) est inférieur à 4 %. Le produit comprend au plus 20 % en poids de chaux magnésienne et au moins 20 % en poids de chaux vive (CaO).

L'engrais est choisi parmi les engrais potassiques, phosphatés et azotés qui sont solubles dans l'eau. En particulier il peut être constitué par un tri super phosphate et/ou un chlorure de potassium et/ou un di-ammonium phosphate.

Ainsi cet engrais comprend des ingrédients ou éléments, qui se présentent sous la forme de granulés et sont de préférence :
- du tri super phosphate (TSP), engrais phosphaté, qui contient 45 % en poids de P₂O₅ sous forme de phosphate monocalcique, reconnu pour sa solubilité dans l'eau et le citrate d'ammonium.
- du chlorure de potassium (KCI), engrais potassique contenant 60 % en poids de K₂O sous forme de chlorure de potassium, engrais également considéré comme soluble dans l'eau.
- du di-ammonium phosphate (DAP) engrais phosphaté soluble contenant 46 % en poids de P₂O₅ sous forme HPO₄⁻ (ion orthophosphorique) et également 18 % d'azote sous forme ammoniacale. Cette forme d'azote est préférée pour sa neutralité vis-à-vis de la présence de chaux et sa grande solubilité dans l'eau.

Pour réaliser un produit selon la présente invention, on détermine la composition pondérale en les différents ingrédients, étant entendu que la quantité d'amendement calcique et magnésien constitue le solde pour une tonne de produit.

On achemine en premier l'amendement calcique et magnésien puis les autres ingrédients sur le bord d'une trémie doseuse de telle sorte que les grains coulent le long de la paroi de la trémie : ceci évite, d'une part, la formation d'un cône au centre de la trémie et, d'autre part, la formation de poussières et donc la perte d'amendement et/ou d'ingrédients. L'acheminement des différents ingrédients et amendement est réalisé par bandes transporteuses ou, de préférence, par des couloirs vibreurs horizontaux : il est conçu pour effriter au minimum les engrais apportés pour éviter la production de fines particules. A savoir des particules comprises entre 2 et 7 mm d'amendements calciques et ou magnésiens sous forme oxyde.

Puis, on vide le contenu de la trémie sur une extrémité d'un tapis roulant dont l'autre extrémité est située à une certaine distance et hauteur par rapport à la bouche du tambour d'un mélangeur dont l'axe de rotation est incliné par rapport à l'horizontale. Par exemple, la distance entre le fond du tambour et l'extrémité libre du tapis roulant est d'environ 3 m et la hauteur de chute dans le fond du tambour est comprise entre 1,5 et 1,7 m environ, le tapis ayant une vitesse d'avancement de l'ordre de 2,95 m/s.

Afin de renforcer la non-formation de fines, on peut lors du jeté dans le tambour pulvériser un produit de protection.

Puis on réalise un mélange de ces différents ingrédients et de l'amendement en faisant tourner le tambour dans un sens puis dans l'autre : par exemple, la vitesse de rotation est d'environ 11,5 tours/minute et ce pendant 1,5 minute au total.

On vide le tambour et on conduit le mélange de granulés ainsi obtenu vers une ensacheuse.

Le produit final obtenu par le procédé de la présente invention et conforme à celle-ci, est original et donne des résultats très intéressants après épandage, ainsi que l'on peut le constater à partir des essais ci-après.

### Essai n°1 :

Sur un terrain en prairie temporaire, on effectue, une première année, une comparaison entre les parcelles ayant reçu un amendement calcique (A), un engrais phospho-potassique (B) et un produit selon l'invention (C) dont les différentes compositions sont regroupées dans le tableau I ci-après :

**Tableau I**

| Apports (unités/ha) | N | P | K | CaO |
|---|---|---|---|---|
| Témoin | 200 | - | - | - |
| A | 200 | - | - | 344 |
| B | 200 | 64 | 176 | - |
| C | 200 | 64 | 176 | 344 |

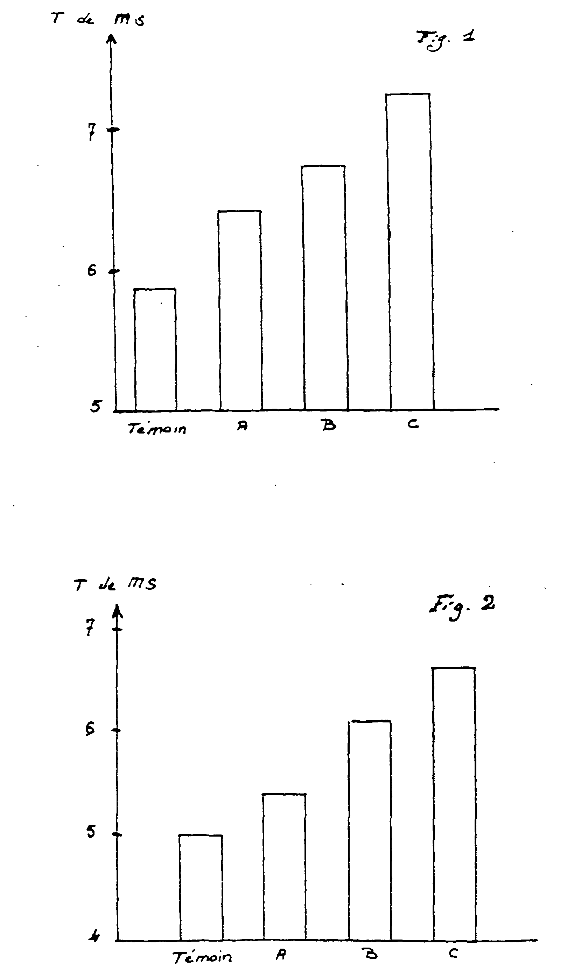

A la figure 1, on a représenté le rendement en tonne de matières sèches des deux coupes d'herbe réalisées cette première année : il apparaît de cette figure 1 et du tableau II regroupant les résultats que le produit selon l'invention (C) a permis d'obtenir un rendement un peu supérieur à celui calculable.

**Tableau II**

| | Témoin | A | B | C |
|---|---|---|---|---|
| Rendement T de ms/ha | 5,87 | 6,40 | 6,76 | 7,27 |
| % d'augmentation par rapport au Témoin | - | 9 % | 15,2 % | 23,9 % |

### Essai n°2 :

Sur ce même terrain en prairie temporaire, on répète, la deuxième année, une comparaison entre les parcelles qui reçoivent à nouveau un amendement calcique (A), un engrais phospho-potassique (B) et un produit selon l'invention (C) dont les différentes compositions sont identiques à celles de l'essai n°1 ci-dessus.

A la figure 2, on a représenté le rendement en tonne de matières sèches des deux coupes d'herbe réalisées cette deuxième année : il apparaît très nettement de cette figure ainsi que du tableau III regroupant les résultats que le produit selon l'invention (C) a permis d'obtenir un rendement bien supérieur à celui calculable. Il est donc ainsi mis en évidence une synergie lors de l'apport dans un même produit, tel que celui selon la présente invention, d'un amendement sous forme oxyde et d'un engrais phospho-potassique.

**Tableau III**

| | Témoin | A | B | C |
|---|---|---|---|---|
| Rendement T de ms/ha | 5,03 | 5,42 | 6,13 | 6,64 |
| % d'augmentation par rapport au Témoin | - | 7,7 % | 21,9 % | 32 % |

Tous ces essais ont été réalisés suivant la méthode des blocs avec 4 répétitions.

## Revendications

1. Produit fertilisant, **caractérisé par le fait qu'**il comprend un amendement calcique et magnésien comprenant au plus 20 % en poids de chaux magnésienne et au moins 20 % en poids de chaux vive (CaO) associé à un engrais simple, binaire ou ternaire et qu'il présente une granulométrie comprise entre 2 et 7 mm.

2. Produit fertilisant selon la revendication 1, **caractérisé par le fait que** l'amendement calcique et magnésien comprend une chaux dont le taux de gaz carbonique (CO₂) est inférieur à 4 %.

3. Produit fertilisant selon la revendication 1, **caractérisé par le fait que** l'engrais est choisi parmi les engrais potassiques, phosphatés et azotés qui sont solubles dans l'eau.

4. Produit fertilisant selon la revendication 1, **caractérisé par le fait que** l'engrais peut être constitué par un tri super phosphate et/ou un chlorure de potassium et/ou un di-ammonium phosphate.

5. Produit fertilisant selon la revendication 4, **caractérisé par le fait que** le tri super phosphate(TSP) contient 45 % en poids de P₂O₅ sous forme de phosphate monocalcique.

6. Produit fertilisant selon la revendication 4, **caractérisé par le fait que** le chlorure de potassium(KCI) contient 60% en poids de K₂O sous forme de chlorure de potassium.

7. Produit fertilisant selon la revendication 4, **caractérisé par le fait que** le di-ammonium phosphate (DAP) contient 46 % en poids de P₂O₅ sous forme HPO₄⁻ et également 18 % d'azote sous forme ammoniacale.

8. Procédé pour l'obtention d'un produit fertilisant selon l'une quelconque des revendications 1 à 7, **caractérisé par le fait que** l'on détermine la quantité de chaque ingrédient de l'engrais et on complète par une quantité d'un amendement calcique et magnésien comprenant une chaux dont le taux en gaz carbonique est inférieur à 4%, puis que l'on achemine vers une trémie-doseuse l'amendement en premier puis les ingrédients de l'engrais, puis que l'on vide ladite trémie-doseuse et on jette le contenu de ladite trémie dans un mélangeur, et que l'on récupère le produit issu du mélangeur pour l'ensacher.

## Patentansprüche

1. Düngemittelprodukt, **dadurch gekennzeichnet, dass** es ein Calcium- und Magnesium-Bodenverbesserungsmittel umfasst, das höchstens 20 Gew.-% Magnesiumkalk und mindestens 20 Gew.-% ungelöschten Kalk (CaO) zusammen mit einem einfachen, binären oder ternären Düngemittel umfasst und das eine Granulometrie von 2 bis 7 mm aufweist.

2. Düngemittelprodukt nach Anspruch 1, **dadurch gekennzeichnet, dass** das Calcium- und Magnesium-Bodenverbesserungsmittel einen Kalk umfasst, dessen Gehalt an Kohlendioxidgas (CO₂) weniger als 4 % beträgt.

3. Düngemittelprodukt nach Anspruch 1, **dadurch gekennzeichnet, dass** das Düngemittel unter Kalium-, Phosphat- und Stickstoff-Düngemitteln, die in Wasser löslich sind, ausgewählt ist.

4. Düngemittelprodukt nach Anspruch 1, **dadurch gekennzeichnet, dass** das Düngemittel aus einem Trisuperphosphat und/oder einem Kaliumchlorid und/oder einem Diammoniumphosphat besteht.

5. Düngemittelprodukt nach Anspruch 4, **dadurch gekennzeichnet, dass** das Trisuperphosphat (TSP) 45 Gew.-% P₂O₅ in Form von Monocalciumphosphat enthält.

6. Düngemittelprodukt nach Anspruch 4, **dadurch gekennzeichnet, dass** das Kaliumchlorid (KCl) 60 Gew.-% K₂O in Form von Kaliumchlorid enthält.

7. Düngemittelprodukt nach Anspruch 4, **dadurch gekennzeichnet, dass** das Diammoniumphosphat (DAP) 46 Gew.-% P₂O₅ in Form von HPO₄⁻ und ferner 18 % Stickstoff in ammoniakalischer Form enthält.

8. Verfahren zur Herstellung eines Düngemittelprodukts nach einem der Ansprüche 1 bis 7, **dadurch gekennzeichnet, dass** man die Menge der einzelnen Bestandteile des Düngemittels bestimmt und mit einer Menge eines Calcium- und Magnesium-Bodenverbesserungsmittels, das einen Kalk umfasst, dessen Gehalt an Kohlendioxidgas weniger als 4 % beträgt, vervollständigt, sodann einem Dosiertrichter zunächst das Bodenverbesserungsmittel und anschließend die Düngemittelbestandteile zuführt, sodann den Dosiertrichter entleert und den Inhalt des Trichters in eine Mischvorrichtung schüttet und das aus der Mischvorrichtung austretende Produkt gewinnt, um es in Säcke zu füllen.

## Claims

1. A fertiliser product, **characterised in that** it comprises a calcium and magnesium ameliorator containing not more than 20% by weight of magnesium lime and at least 20% by weight of quicklime (CaO) associated with a single, binary or ternary fertiliser and having a particle size distribution in the range from 2 to 7 mm.

2. A fertiliser product according to claim 1, **characterised in that** the calcium and magnesium ameliorator contains lime having a carbon dioxide (CO₂) content below 4%.

3. A fertiliser product according to claim 1, **characterised in that** the fertiliser is chosen from among water-soluble potassium, phosphate and nitrogen fertilisers.

4. A fertiliser product according to claim 1, **characterised in that** the fertiliser can comprise a tri super phosphate and/or a potassium chloride and / or a diammonium phosphate.

5. A fertiliser product according to claim 4, **characterised in that** the tri super phosphate (TSP) contains 45% by weight of P₂O₅ in the form of monocalcium phosphate.

6. A fertiliser product according to claim 4, **characterised in that** the potassium chloride (KCI) contains 60% by weight of K₂O in the form of potassium chloride.

7. A fertiliser product according to claim 4, **characterised in that** the diammonium phosphate (DAP) contains 46% by weight of P₂O₅ in the form HPO₄- and also contains 18. 5 % nitrogen in ammoniacal form.

8. A method of obtaining a fertiliser product according to any of claims 1 to 7, **characterised in that** the quantity of each ingredient in the fertiliser is determined and supplemented by a quantity of a calcium and magnesium ameliorator comprising lime in which the carbon dioxide content is below 4%< after which the ameliorator followed by the fertiliser ingredients are conveyed to a metering hopper, the hopper is emptied and the contents thereof are placed in a mixer and the product is recovered from the mixer and bagged.
